# EUROPEAN PATENT SPECIFICATION

(11) **EP 2 649 548 B1**
(45) Date of publication and mention of the grant of the patent: **08.08.2018**
(21) Application number: 11847224.0
(22) Date of filing: 06.12.2011
(51) Int. Cl.: G06F 21/56, G06F 9/44, G06F 9/455

(54) **ANTIMALWARE PROTECTION OF VIRTUAL MACHINES**
SCHUTZ VON VIRTUELLEN MASCHINEN VOR SCHADPROGRAMMEN
PROTECTION DES MACHINES VIRTUELLES CONTRE LES PROGRAMMES MALVEILLANTS

(30) Priority: 07.12.2010 US 961854
(43) Date of publication of application: 16.10.2013
(73) Proprietor: Microsoft Technology Licensing, LLC, Redmond, WA 98052 (US)
(72) Inventor: JARRETT, Michael Sean, Redmond, Washington 98052-6399 (US); JOHNSON, Joseph Jared, Redmond, Washington 98052-6399 (US); KAPOOR, Vishal, Redmond, Washington 98052-6399 (US); THOMAS, Anil Francis, Redmond, Washington 98052-6399 (US); NEYSTADT, Eugene John, Redmond, Washington 98052-6399 (US); BATCHELDER, Dennis Scott, Redmond, Washington 98052-6399 (US)
(74) Representative: Grünecker Patent- und Rechtsanwälte PartG mbB
(86) International application number: PCT/US2011/063615
(87) International publication number: WO 2012/078690

(56) References cited:
- EP-A2- 2 154 626
- WO-A2-2008/048665
- US-A1- 2008 184 373
- US-A1- 2008 263 658
- US-A1- 2008 320 594
- US-A1- 2008 320 594
- US-A1- 2009 158 432
- US-A1- 2009 172 663
- US-A1- 2010 058 432

## Description

### BACKGROUND

A virtual machine (VM) comprises software that executes on a guest partition of a hosting computer system to generally act as if it was an independent physical machine. A computer system may host multiple virtual machines, each running on a virtual machine monitor (VMM), also referred to as a hypervisor, that controls the sharing of the computer system's resources among the virtual machines. Typically virtual machines are run to utilize a physical machine's hardware resources more fully than can be done by conventional programs, and/or to run different operating systems on the same physical machine at the same time.

Virtual machines are becoming more and more prevalent, and, like any computer system, virtual machines are vulnerable to malicious software, or malware. As such, there exists a need for antimalware products to protect them. This may be accomplished by running traditional antimalware software on each guest partition.

However, there are drawbacks to operating this way, including that antimalware components are duplicated on each guest partition, whereby each partition consumes network, memory, and CPU resources for the antimalware components. Further, guest antimalware products cannot take advantage of virtual machine services, such as the ability to snapshot or roll back.

US 2009/0158432 A1 describes a tangible medium embodying instructions usable by a computer system to protect a plurality of guest virtual machines (VMs), which execute via virtualization software on a common host platform, from malicious code. A scan engine is configured to scan data for malicious code and determine a result of the scanning, wherein the result indicates whether malicious code is present in the data. A driver portion is configured for installation in an operating system of a target VM, which is one of the guest VMs. The driver portion intercepts an access request to a file, that originates within the target VM. The driver portion communicates information identifying a location of the data to be scanned by the scan engine without sending a copy of the data to the scan engine. The scan engine executes within the virtualization layer outside a context of the target VM.

EP 2 154 626 A2 introduces a technique that causes a second virtual machine, which executes antivirus software for detecting and removing the virus, to monitor at least one first virtual machine that is created on a computer and execute one or more application program. A state of the first virtual machine is periodically stored as snapshot, the first virtual machine from which the virus is detected is suspended if the antivirus software executed on the second virtual machine detects the virus, and the first virtual machine is restored at a state of a point in time when the snapshot is stored by using the snapshot of the suspended first virtual machine.

US 2008/0320594 A1 presents a malware detection enabling out-of-the box, tamper-resistant malware detection without losing the semantic view. The presented system comprises at least one guest operating system and at least one virtual machine, where the guest operating system runs on the virtual machine. Having virtual resources, the virtual machine resides on a host operating system. The virtual resources include virtual memory and at least one virtual disk. A virtual machine examiner is used to examine the virtual machine. With a virtual machine inspector, a guest function extrapolator, and a transparent presenter, the virtual machine examiner resides outside the virtual machine. The virtual machine inspector is configured to retrieve virtual machine internal system states and/or events. The guest function extrapolator is configured to interpret such states and/or events. The transparent presenter is configured to present the interpreted states and/or events to anti-malware software. The anti-malware software is configured to use the interpreted states and/or events to detect any system compromise.

US 2009/0172663 A1 relates to communicating information between components in a virtualization enabled platform. In an example, a component exchanges data via a communication page which only integrity protected components can access. In another example, an integrity protected communication broker exchanges data from a communication page of one component to another communication page of another component.

### SUMMARY

The invention is what is specified in the independent claims.

Preferred embodiments are specified in the dependent claims.

This Summary is provided to introduce a selection of representative concepts in a simplified form that are further described below in the Detailed Description. This Summary is not intended to identify key features or essential features of the claimed subject matter, nor is it intended to be used in any way that would limit the scope of the claimed subject matter.

Briefly, various aspects of the subject matter described herein are directed towards a technology by which an antimalware scanning mechanism (e.g., scanning components) are shared by a plurality of guest partitions that correspond to virtual machines in a virtual machine environment. To this end, guest partitions may include a guest antimalware agent that communicates with the scanning mechanism to use its shared antimalware scanning resources and shared antimalware scanning functionality. For example, the resources of the antimalware scanning mechanism may include antimalware signatures, so that each partition need not maintain its own signatures. The shared antimalware scanning functionality may comprise (e.g., code that performs) scanning of data such as objects (e.g., files) that are received from the guest antimalware agents. To leverage the capabilities of the guest operating system, the guest antimalware agents may execute instructions provided by the antimalware scanning component to collect additional scanning or telemetry information, or take remedial actions against detected malware.

In one aspect, a management component is coupled to the antimalware scanning mechanism so as to provide virtual machine management services to the antimalware scanning mechanism. For example, the antimalware scanning mechanism may communicate with the management component to pause a guest partition, resume a guest partition, snapshot a guest partition, or rollback a guest partition to a previous snapshot. The management component may also provide shared orchestration for scanning any guest partition.

In one implementation, the antimalware scanning mechanism resides in a guest partition that is separate from the other guest partitions that share the antimalware scanning mechanism. In an alternative implementation, the antimalware scanning mechanism resides on the root partition of the virtual machine environment.

Other advantages may become apparent from the following detailed description when taken in conjunction with the drawings.

### BRIEF DESCRIPTION OF THE DRAWINGS

The present invention is illustrated by way of example and not limited in the accompanying figures in which like reference numerals indicate similar elements and in which:
FIGURE 1 is a block diagram representing an example virtual machine environment in which an antimalware scanning mechanism runs on a guest partition and is shared by guest partitions via guest agents.
FIG. 2 is a block diagram representing an example virtual machine environment in which an antimalware scanning mechanism runs on a root partition and is shared by guest partitions via guest agents.
FIG. 3 is a flow diagram representing example steps for implementing a shared antimalware scanning mechanism in a virtual machine environment.
FIG. 4 is a flow diagram representing example steps for scanning a guest partition in an offline state.
FIG. 5 is a block diagram representing exemplary non-limiting networked environments in which various embodiments described herein can be implemented.
FIG. 6 is a block diagram representing an exemplary non-limiting computing system or operating environment in which one or more aspects of various embodiments described herein can be implemented.

### DETAILED DESCRIPTION

Various aspects of the technology described herein are generally directed towards an efficient way to protect virtual machines from malware, in which each virtual machine runs on a guest partition. In one implementation, the antimalware software is divided into separate components, including a lightweight agent, a shared scanning and signature update component, and a management component. An agent runs on supported guest partitions and provides real-time and online operating system interaction services. The scanning and signature update component, which may reside on a separate guest partition or the root partition, is configured to be used by each of the other guest agents. The management component provides centralized reporting and access to virtual machine services, and, for example, may reside on the root partition.

As will be understood, the technology described herein provides centralized anti-malware capabilities for multiple guest virtual machines in a virtual machine environment via the shared scanning component. This facilitates real-time antimalware protection by directing scan requests to the shared scanning component, including possibly on-demand scans and remediation on guest partitions, e.g., through the use of simple scripts provided by shared scanning component.

Moreover, the management component, by running on the root partition, provides pause / resume / snapshot / rollback and inspection services for the scanning component. This facilitates on-demand scans and remediation on guest partitions by the scanning component without the direct cooperation of the guest agent (e.g., if the guest agent is compromised or unavailable), while the guest partitions are paused via the management component, or while the guest is not running (offline), which may be used to detect malware that has stealth or protection capabilities from the perspective of the guest agent.

It should be understood that any of the examples herein are non-limiting. For example, while scanning of objects such as files is described, security evaluation of other content, such as for network intrusion protection, data leakage, guest verification and so forth may benefit from the technology described herein. As such, the present invention is not limited to any particular embodiments, aspects, concepts, structures, functionalities or examples described herein. Rather, any of the embodiments, aspects, concepts, structures, functionalities or examples described herein are non-limiting, and the present invention may be used various ways that provide benefits and advantages in virtual computing and/or protection against malware in general.

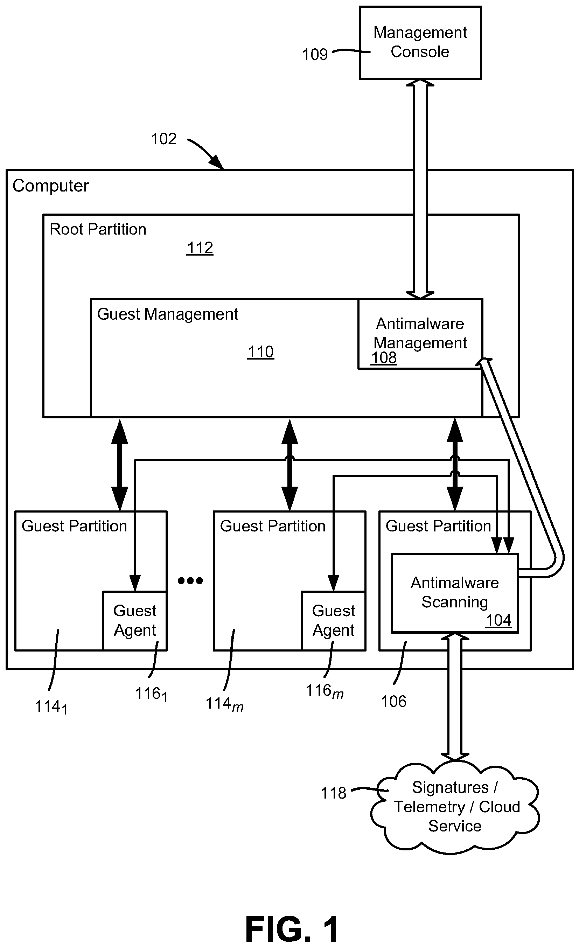

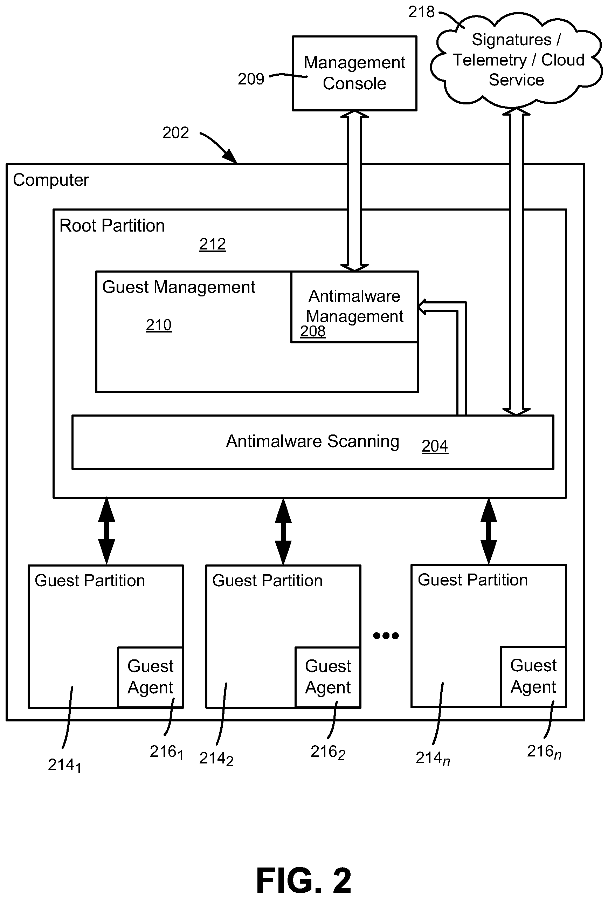

FIG. 1 shows example components of a computer system 102 configured with virtual machine distributed antimalware. The components in this exemplified implementation include a scanning mechanism 104 (comprising one or more antimalware components) residing in a dedicated scanning guest partition 106, and an antimalware management component 108 (which may be interfaced with via a local or remote management console 109) as part of guest management services 110 on a root partition 112. Note that FIG. 1 is only a non-limiting example of a possible deployment, and others are feasible, including the example deployment represented in FIG. 2.

In general, the root partition 112 comprises a running operating system environment from which the state of other virtual machine guest partitions 106 and 114₁-114*ₘ* may be controlled. Each guest partition 106 and 114₁-114*ₘ* corresponds to any virtual machine or machine partition that is not the root partition 112.

Each guest partition 114₁-114*ₘ* for which real-time antimalware support is provided includes a respective guest agent 116₁-116*ₘ*, comprising software that provides real-time protection services for that guest partition, possibly along with other services. Each guest agent 116₁-116*ₘ* is specific to the operating system being run on its respective guest partition 114₁-114*ₘ*. Note that although not shown in FIG. 1, the guest partition 106 containing the antimalware scanning mechanism 104 also may include such a guest agent.

In order to protect guest agents from being tampered with by malicious code that successfully compromises a guest partition, a "privileged" protection component, (e.g., running inside the root partition or a dedicated security virtual machine) may monitor the integrity of the guest agent and other relevant components of guest virtual machine.

Each guest agent (e.g., 116₁) provides real-time system monitoring with the capability to detect and block access to objects. To this end, the guest agent 116₁ communicates bi-directionally (e.g., at high speed) with the scanning guest partition 106. Note that any communication mechanism is feasible, such as through the root partition, through a simulated network interface and so forth; however in one implementation communication is over a high-speed bus or shared memory block that exists between the partitions. Any guest agent (e.g., 116₁) may be configured with a user interface, such as if guest partitions are often used interactively. Such a user interface may provide an interactive user of the guest visibility into the current security state of the guest, or allow an interactive user to request that the antimalware component begin a specific on-demand scan.

Each guest agent such as the agent 116₁ may be (optionally) configured with the ability to run simple scripts, e.g., provided by the scanning guest partition 106 over a suitable bi-directional communication mechanism as generally described herein. Configuring the agents with the ability to run scripts avoids the need for the agent to be coded with its own logic with respect to making decisions on what to scan, what to do when malware is detected, and the like. For example, to scan a guest partition's files, a script may request that the agent feed its files or some subset thereof to the antimalware scanning mechanism 104, which scans them, may perform some needed remediation such as to clean a file, and may return results of the scanning / remediation to the agent, including a script with actions to take, e.g., files to delete or quarantine. Such scripts may include the ability to touch resources (e.g., triggering real-time transport protocol capabilities), and also to modify or terminate / delete resources.

The antimalware scanning mechanism 104 performs scanning, remediation, signature update operations, and in general enforces antimalware aspects of security policy with the cooperation of the guest agent and/or the management components. In general, the antimalware scanning mechanism 104 provides antimalware scanning as a service to the guest agents 116₁ -116*ₘ*. Further, the antimalware scanning mechanism 104 also may initiate scanning or remedial actions against a guest partition, such as cooperatively using services of the guest agent, or alternatively without the guest partition's knowledge or consent, (e.g., while the guest partition is paused / offline), through the support of the management component 108.

With respect to real-time monitoring, the antimalware scanning mechanism 104 communicates bi-directionally with the guest agents 116₁-116*ₘ*, including in one implementation to identify any malware in content transmitted from the guest partitions. In general, for real-time monitoring, each agent feeds data such as an object set (comprising one or more objects such as files, registry data, processes or the like) to the antimalware scanning mechanism 104, which then evaluates the data against antimalware signatures, and returns a result, possibly taking a remedial action (e.g., cleaning the object) and/or including scripted instructions for the agent to take a remedial action (e.g., remove a file or quarantine a file), such as via a script.

Note that it is feasible to provide some or all of the guest agents 116₁-116*ₘ* with some scanning capabilities / intelligence themselves, rather than have them simply forward objects and receive and act on scripted results. For example, if a particular virus is currently widespread, the antimalware scanning mechanism 104 may provide the guest agent with a subset of signatures to look for with respect to a given file or file type, whereby the guest agent can handle scanning or remediation itself in the event such a file is encountered. This may be via a script, and/or possibly to some extent by coding basic scanning functionality into the agent.

Another benefit of the shared scanning mechanism 104 is that signatures as well as other scanning components may be updated, without experiencing significant scanning downtime. Further, information may be uploaded to a remote location, such as data, reports and sample object submission for subsequent analysis and so forth. This aspect of the shared scanning mechanism 104 is represented in FIG. 1 via signatures / telemetry / cloud service118. Note that the other guest partitions 114₁-114*ₘ* need not have access to the internet, for example, yet still benefit from the update and telemetry access of the shared guest partition 106.

Moreover, the remote access capabilities of the antimalware scanning mechanism 104 may include communicating with a shared "cloud scanning" service for a decision (infected or clean) on suspicious content not yet matched by signatures. The antimalware scanning mechanism 104 may make such queries on behalf of multiple guests, such that guests get the benefit of the cloud service without needing Internet access directly. Also, the antimalware scanning mechanism 104 may cache the results, so that it only has to make one request to the cloud service even if multiple guests are seeing the same suspicious content.

The antimalware scanning mechanism 104 also has a communication link with the antimalware management component 108. As described above, this provides the antimalware scanning mechanism 104 with the ability to integrate antimalware scanning with virtual machine management capabilities. For example, the antimalware scanning mechanism 104 may request that the management component 108 pause a guest partition, thereby providing the scanning mechanism 104 with the ability to scan a guest partition (or a snapshot thereof) offline, and/or with the ability to manipulate offline guest partition (or a snapshot thereof) to remove malware. Offline scanning may be performed if a serious problem is detected, that is, reactively, such as if the guest has crashed, or if an operating system file that cannot be cleaned is infected, but cannot be replaced online because the file is needed to run the operating system. Offline scanning also may be performed proactively, e.g., before staring a guest partition; if a partition is known to be free of infections at startup, but then becomes infected while running, a rapid diagnosis may be made. This integration capability also provides the ability to perform scans and remediation on guests not supported by a guest agent.

The management component 108 thus comprises a component with access to the virtual machine management services 110. In the exemplified implementation of FIG. 1, the management component 108 is part of the virtual machine management services 110, and communicates with the scanning mechanism 104, but not with the individual guests agents 116₁-116*ₘ*. Among its operations, the management component 108 may monitor the scanning component's heartbeat, such that if the scanning component and/or scanning partition become unresponsive, the management component 108 may restart the scanning component or scanning partition, and /or raise an alert. Note that some malware actively tries to disable antimalware protection, and having a shared scanning service monitoring the guests helps in making the agents running in the guests tamper-resistant.

Further, the management component 108 is able to act as a centralized collection point and intermediary for communication to and from the security management console 109. The management component 108 may provide the scanning partition 106 with the online ability to manipulate guest partitions, including the ability to stop an infected guest, or revert a guest partition to a snapshot. The management component 108 may provide the scanning mechanism 104 with the ability to manipulate a guest partition offline.

Note that although the management component 108 has access to the virtual machine management services 110, along with the ability to coordinate with the scanning mechanism 104, and the ability to report (and potentially be reconfigured) by any central security management services, the management component 108 is a distinct component from virtual machine management, antimalware management, and the scanning mechanism 104. The management component 108 need not even be on the same computer system as these components, as long as they can communicate, e.g., over network connections. However, deploying the management component 108 on the root partition 112 (as exemplified in FIG. 1) generally reduces the latency of communication with the scanning partition 106 and the virtual machine management services 110.

As shown in FIG. 1, the scanning mechanism 104 may reside in the dedicated scanning guest partition 106; (note that "dedicated" as used herein refers to having resources reserved for scanning functionality, and does not mean that such a partition cannot also be used for other purposes). This implementation provides a security boundary between the antimalware scanning mechanism 104 (whose components are often targeted by security vulnerabilities) and the root partition 112. Although not explicitly shown, multiple scanning partitions can be used, such as for failover capabilities, e.g., if one scanning partition fails, another one may quickly resume and take its place. Load balancing and/or workload distribution is another possible use of multiple scanning partitions, e.g., in the event that a single scanning partition is not able to meet scanning demands.

In an alternative implementation, as generally represented in FIG. 2 (where like components are labeled by 2xx instead of 1xx in FIG. 1), a scanning component 204 (or more than one) may be deployed in the root partition 212. This has the potential for significant optimization, saving the overhead of an entire guest partition / operating system, while providing direct access to management components and stored guest partition state. However, this requires the scanning component to be available for the operating system deployed on the root partition 212, and reduces the protection of the root partition 212 from potential exploits from content found in guest partitions.

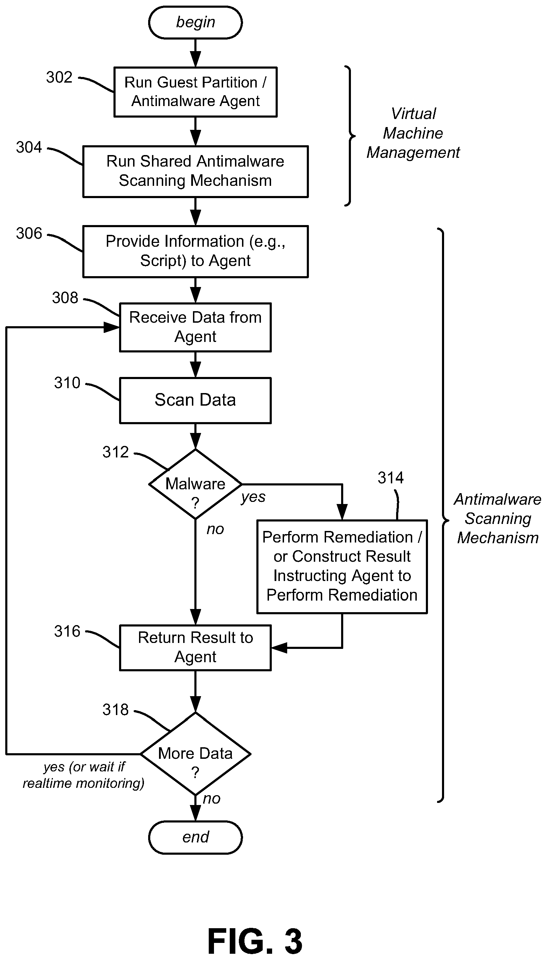

By way of summary, FIG. 3 shows example steps that may be taken to provide malware protection using the above-described components. Steps 302 and 304 represent running the guest partition and an antimalware agent, and running the shared antimalware scanning mechanism, respectively; note that while only one agent is shown, it is understood that similar steps are performed with each other of the plurality of agents that are run. Further note that steps 302 and 304 are performed by virtual machine management in an implementation as in FIG. 1, however step 304 may be performed by other root partition software in an implementation as in FIG. 2 where the shared antimalware scanning mechanism is not run in a guest partition.

Steps 306-318 represent example actions performed by and from the perspective of the antimalware scanning mechanism, in which the agent relies on the antimalware scanning mechanism for the scan. Step 306 represents providing information such as a script to the agent. In a scan that is not a real-time scan, the script may identify what files, folders, or other operating system resources to provide for scanning, what file types to provide, and so forth. In a real time scan, the information may be an instruction or the like informing the agent that scanning is turned on, and that the agent is to provide each appropriate object to the antimalware scanning mechanism for real time scanning.

Step 308 represents the agent providing data such as an object set (e.g., one or more files, registry data or other data blobs) to the antimalware scanning mechanism, which receives it for scanning, as represented by step 310. If the data contains malware, step 312 takes action with respect to that data as represented by step 314. As described above, this may be by performing remediation in the antimalware scanning mechanism, e.g., cleaning data before returning it, and/or constructing a result that instructs the agent to take some remediation action (e.g., remove a file, quarantine a file, write a cleaned file back).

Note that sometimes, malware cannot be cleaned from a compromised virtual machine. In a computer system that is not configured as a virtual environment, human operator intervention is needed, usually by reinstalling a machine. However in a virtual environment, a management component can automatically (possibly after asking for administrator approval) restore the virtual machine to a previous known good snapshot, or by rebuilding a virtual machine image.

Step 316 returns the result to the agent, which may include a script of one or more actions for the agent to perform, and/or a request for the next set of data. Step 318 represents ending the scanning process if the scan is complete, or continuing the scanning process if more scanning is needed, either because there is at least one more set of data to scan, or because the scan is a real time monitoring operation, which continues indefinitely by waiting for the next set of data.

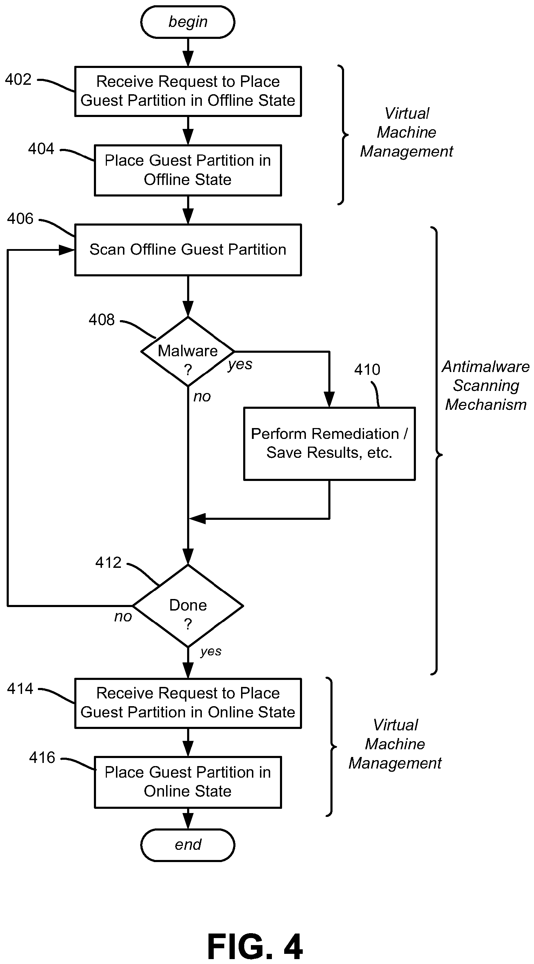

FIG. 4 is an example of offline scanning of a guest partition, beginning at step 402 where the management component 108 receives a request (e.g., from the antimalware scanning mechanism 104) to move the guest partition into an offline state (step 404). Once in the offline state, Steps 406-412 represent example actions performed by and from the perspective of the antimalware scanning mechanism 104. If during the scan (step 406) malware is encountered at step 408, remediation is performed at step 410. Note that the agent is offline, and thus cannot participate in remediation, which may include cleaning, removing or quarantining a file, as well as possibly replacing a corrupted operating system file that cannot be replaced while in an online state. Also note that step 410 represents saving the results of the malware remediation, for analysis purposes, for informing the guest partition what occurred, to upload telemetry data, and so forth. Step 412 repeats the scanning until it is complete, e.g., all appropriate file system files have been scanned, for example.

When complete, steps 414 and 416 are performed by the management component 108 to restore the guest partition to an online state. e.g., as requested by the antimalware scanning mechanism 104.

### EXEMPLARY NETWORKED AND DISTRIBUTED ENVIRONMENTS

One of ordinary skill in the art can appreciate that the various embodiments and methods described herein can be implemented in connection with any computer or other client or server device, which can be deployed as part of a computer network or in a distributed computing environment, and can be connected to any kind of data store or stores. In this regard, the various embodiments described herein can be implemented in any computer system or environment having any number of memory or storage units, and any number of applications and processes occurring across any number of storage units. This includes, but is not limited to, an environment with server computers and client computers deployed in a network environment or a distributed computing environment, having remote or local storage.

Distributed computing provides sharing of computer resources and services by communicative exchange among computing devices and systems. These resources and services include the exchange of information, cache storage and disk storage for objects, such as files. These resources and services also include the sharing of processing power across multiple processing units for load balancing, expansion of resources, specialization of processing, and the like. Distributed computing takes advantage of network connectivity, allowing clients to leverage their collective power to benefit the entire enterprise. In this regard, a variety of devices may have applications, objects or resources that may participate in the resource management mechanisms as described for various embodiments of the subject disclosure.

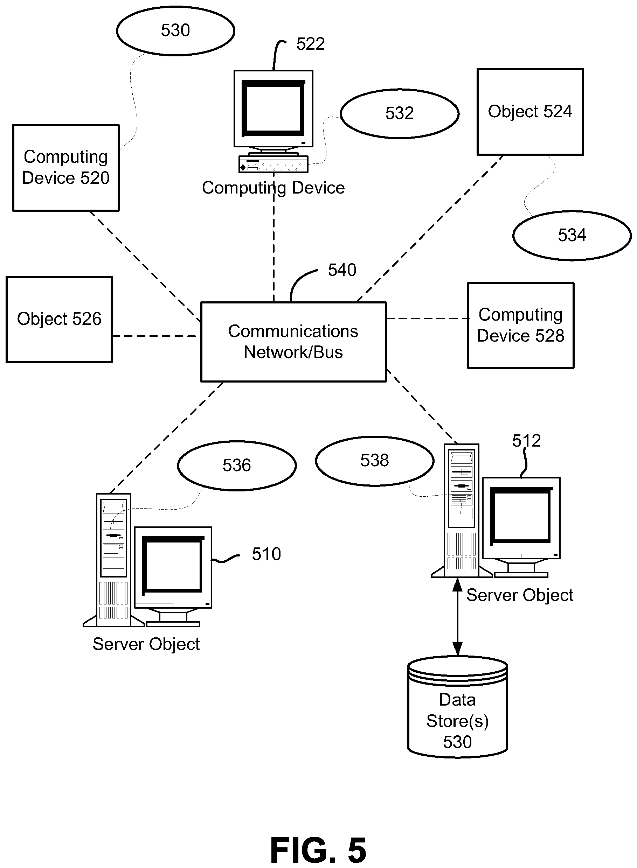

FIG. 5 provides a schematic diagram of an exemplary networked or distributed computing environment. The distributed computing environment comprises computing objects 510, 512, etc., and computing objects or devices 520, 522, 524, 526, 528, etc., which may include programs, methods, data stores, programmable logic, etc. as represented by example applications 530, 532, 534, 536, 538. It can be appreciated that computing objects 510, 512, etc. and computing objects or devices 520, 522, 524, 526, 528, etc. may comprise different devices, such as personal digital assistants (PDAs), audio/video devices, mobile phones, MP3 players, personal computers, laptops, etc.

Each computing object 510, 512, etc. and computing objects or devices 520, 522, 524, 526, 528, etc. can communicate with one or more other computing objects 510, 512, etc. and computing objects or devices 520, 522, 524, 526, 528, etc. by way of the communications network 540, either directly or indirectly. Even though illustrated as a single element in FIG. 5, communications network 540 may comprise other computing objects and computing devices that provide services to the system of FIG. 5, and/or may represent multiple interconnected networks, which are not shown. Each computing object 510, 512, etc. or computing object or device 520, 522, 524, 526, 528, etc. can also contain an application, such as applications 530, 532, 534, 536, 538, that might make use of an API, or other object, software, firmware and/or hardware, suitable for communication with or implementation of the application provided in accordance with various embodiments of the subject disclosure.

There are a variety of systems, components, and network configurations that support distributed computing environments. For example, computing systems can be connected together by wired or wireless systems, by local networks or widely distributed networks. Currently, many networks are coupled to the Internet, which provides an infrastructure for widely distributed computing and encompasses many different networks, though any network infrastructure can be used for exemplary communications made incident to the systems as described in various embodiments.

Thus, a host of network topologies and network infrastructures, such as client/server, peer-to-peer, or hybrid architectures, can be utilized. The "client" is a member of a class or group that uses the services of another class or group to which it is not related. A client can be a process, e.g., roughly a set of instructions or tasks, that requests a service provided by another program or process. The client process utilizes the requested service without having to "know" any working details about the other program or the service itself.

In a client / server architecture, particularly a networked system, a client is usually a computer that accesses shared network resources provided by another computer, e.g., a server. In the illustration of FIG. 5, as a non-limiting example, computing objects or devices 520, 522, 524, 526, 528, etc. can be thought of as clients and computing objects 510, 512, etc. can be thought of as servers where computing objects 510, 512, etc., acting as servers provide data services, such as receiving data from client computing objects or devices 520, 522, 524, 526, 528, etc., storing of data, processing of data, transmitting data to client computing objects or devices 520, 522, 524, 526, 528, etc., although any computer can be considered a client, a server, or both, depending on the circumstances.

A server is typically a remote computer system accessible over a remote or local network, such as the Internet or wireless network infrastructures. The client process may be active in a first computer system, and the server process may be active in a second computer system, communicating with one another over a communications medium, thus providing distributed functionality and allowing multiple clients to take advantage of the information-gathering capabilities of the server.

In a network environment in which the communications network 540 or bus is the Internet, for example, the computing objects 510, 512, etc. can be Web servers with which other computing objects or devices 520, 522, 524, 526, 528, etc. communicate via any of a number of known protocols, such as the hypertext transfer protocol (HTTP). Computing objects 510, 512, etc. acting as servers may also serve as clients, e.g., computing objects or devices 520, 522, 524, 526, 528, etc., as may be characteristic of a distributed computing environment.

### EXEMPLARY COMPUTING DEVICE

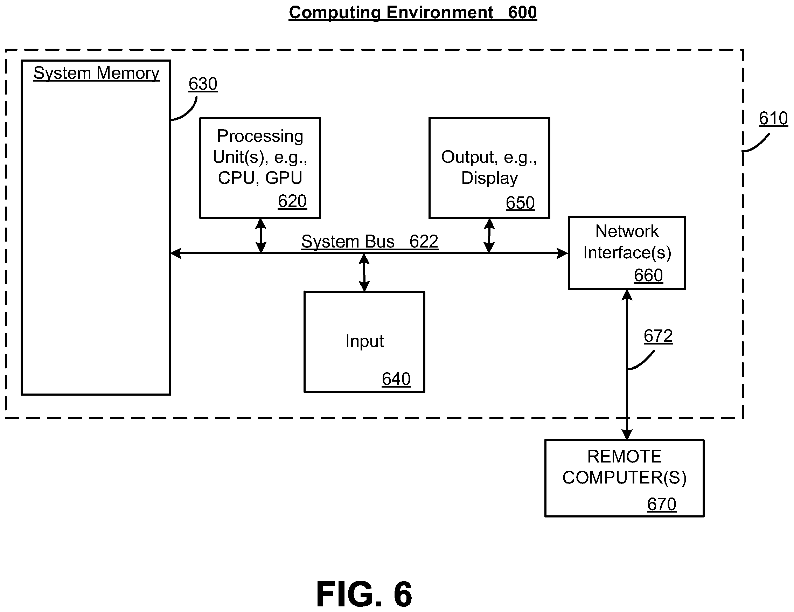

As mentioned, advantageously, the techniques described herein can be applied to any device. It can be understood, therefore, that handheld, portable and other computing devices and computing objects of all kinds are contemplated for use in connection with the various embodiments. Accordingly, the below general purpose remote computer described below in FIG. 6 is but one example of a computing device.

Embodiments can partly be implemented via an operating system, for use by a developer of services for a device or object, and/or included within application software that operates to perform one or more functional aspects of the various embodiments described herein. Software may be described in the general context of computer executable instructions, such as program modules, being executed by one or more computers, such as client workstations, servers or other devices. Those skilled in the art will appreciate that computer systems have a variety of configurations and protocols that can be used to communicate data, and thus, no particular configuration or protocol is considered limiting.

FIG. 6 thus illustrates an example of a suitable computing system environment 600 in which one or aspects of the embodiments described herein can be implemented, although as made clear above, the computing system environment 600 is only one example of a suitable computing environment and is not intended to suggest any limitation as to scope of use or functionality. In addition, the computing system environment 600 is not intended to be interpreted as having any dependency relating to any one or combination of components illustrated in the exemplary computing system environment 600.

With reference to FIG. 6, an exemplary remote device for implementing one or more embodiments includes a general purpose computing device in the form of a computer 610. Components of computer 610 may include, but are not limited to, a processing unit 620, a system memory 630, and a system bus 622 that couples various system components including the system memory to the processing unit 620.

Computer 610 typically includes a variety of computer readable media and can be any available media that can be accessed by computer 610. The system memory 630 may include computer storage media in the form of volatile and/or nonvolatile memory such as read only memory (ROM) and/or random access memory (RAM). By way of example, and not limitation, system memory 630 may also include an operating system, application programs, other program modules, and program data.

A user can enter commands and information into the computer 610 through input devices 640. A monitor or other type of display device is also connected to the system bus 622 via an interface, such as output interface 650. In addition to a monitor, computers can also include other peripheral output devices such as speakers and a printer, which may be connected through output interface 650.

The computer 610 may operate in a networked or distributed environment using logical connections to one or more other remote computers, such as remote computer 670. The remote computer 670 may be a personal computer, a server, a router, a network PC, a peer device or other common network node, or any other remote media consumption or transmission device, and may include any or all of the elements described above relative to the computer 610. The logical connections depicted in Fig. 6 include a network 672, such local area network (LAN) or a wide area network (WAN), but may also include other networks/buses. Such networking environments are commonplace in homes, offices, enterprise-wide computer networks, intranets and the Internet.

As mentioned above, while exemplary embodiments have been described in connection with various computing devices and network architectures, the underlying concepts may be applied to any network system and any computing device or system in which it is desirable to improve efficiency of resource usage.

Also, there are multiple ways to implement the same or similar functionality, e.g., an appropriate API, tool kit, driver code, operating system, control, standalone or downloadable software object, etc. which enables applications and services to take advantage of the techniques provided herein. Thus, embodiments herein are contemplated from the standpoint of an API (or other software object), as well as from a software or hardware object that implements one or more embodiments as described herein. Thus, various embodiments described herein can have aspects that are wholly in hardware, partly in hardware and partly in software, as well as in software.

The word "exemplary" is used herein to mean serving as an example, instance, or illustration. For the avoidance of doubt, the subject matter disclosed herein is not limited by such examples. In addition, any aspect or design described herein as "exemplary" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used, for the avoidance of doubt, such terms are intended to be inclusive in a manner similar to the term "comprising" as an open transition word without precluding any additional or other elements when employed in a claim.

As mentioned, the various techniques described herein may be implemented in connection with hardware or software or, where appropriate, with a combination of both. As used herein, the terms "component," "module," "system" and the like are likewise intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on computer and the computer can be a component. One or more components may reside within a process and/or thread of execution and a component may be localized on one computer and/or distributed between two or more computers.

The aforementioned systems have been described with respect to interaction between several components. It can be appreciated that such systems and components can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it can be noted that one or more components may be combined into a single component providing aggregate functionality or divided into several separate sub-components, and that any one or more middle layers, such as a management layer, may be provided to communicatively couple to such sub-components in order to provide integrated functionality. Any components described herein may also interact with one or more other components not specifically described herein but generally known by those of skill in the art.

In view of the exemplary systems described herein, methodologies that may be implemented in accordance with the described subject matter can also be appreciated with reference to the flowcharts of the various figures. While for purposes of simplicity of explanation, the methodologies are shown and described as a series of blocks, it is to be understood and appreciated that the various embodiments are not limited by the order of the blocks, as some blocks may occur in different orders and/or concurrently with other blocks from what is depicted and described herein. Where non-sequential, or branched, flow is illustrated via flowchart, it can be appreciated that various other branches, flow paths, and orders of the blocks, may be implemented which achieve the same or a similar result. Moreover, some illustrated blocks are optional in implementing the methodologies described hereinafter.

### CONCLUSION

While the invention is susceptible to various modifications and alternative constructions, certain illustrated embodiments thereof are shown in the drawings and have been described above in detail. It should be understood, however, that there is no intention to limit the invention to the specific forms disclosed, but on the contrary, the intention is to cover all modifications, alternative constructions, and equivalents falling within the scope of the invention.

In addition to the various embodiments described herein, it is to be understood that other similar embodiments can be used or modifications and additions can be made to the described embodiment(s) for performing the same or equivalent function of the corresponding embodiment(s) without deviating therefrom. Still further, multiple processing chips or multiple devices can share the performance of one or more functions described herein, and similarly, storage can be effected across a plurality of devices. Accordingly, the invention is not to be limited to any single embodiment, but rather is to be construed in scope in accordance with the appended claims.

## Claims

1. A system (102, 202) in a computing environment, the system comprising:
a plurality of guest partitions (106, 114₁-114*ₘ*, 214₁-214*ₙ*) corresponding to virtual machines in a virtual machine environment, each guest partition including a guest antimalware agent (116₁-116*ₘ*, 216₁-216*ₙ*); and
an antimalware scanning mechanism (104, 204) comprising one or more antimalware-related components, the antimalware scanning mechanism configured to communicate with the guest antimalware agents on the guest partitions, the antimalware scanning mechanism further configured to provide shared antimalware scanning resources and shared antimalware scanning functionality to the guest partitions via the guest antimalware agents,
the system further comprising:
a management component (108, 208) that is part of virtual machine management services (110) on a root partition (112, 212), the management component being configured to communicate with the antimalware scanning mechanism, **characterized in that** the antimalware scanning mechanism is further configured to communicate with the management component to use the management services to place a guest partition into an offline state for scanning by the antimalware scanning mechanism; and wherein the antimalware scanning mechanism is further configured to take any needed remedial actions against the guest partition in offline state.

2. The system of claim 1 wherein the management component is configured to protect the guest antimalware agents and to suspend, resume, recover and rebuild virtual machines to enable scanning and remediate infections.

3. The system of claim 2 wherein the antimalware scanning mechanism communicates with the management component to use the management services to pause a guest partition, resume a guest partition, snapshot a guest partition, rollback a guest partition to a previous known good snapshot, or rebuild a virtual machine image.

4. The system of claim 1 wherein the antimalware scanning mechanism is further configured to obtain signature updates from a remote data location, upload telemetry data to a remote data location, or to communicate with a cloud service with respect to obtaining a decision on suspicious content, or any combination of being further configured to obtain signature updates from a remote data location, upload telemetry data to a remote data location, or to communicate with a cloud service with respect to obtaining a decision on suspicious content.

5. A method, in a computing environment, performed at least in part on at least one processor, the method comprising:
running (302) a plurality of guest partitions corresponding to virtual machines in a virtual machine environment, each guest partition including a guest antimalware agent; and
running (304) an antimalware scanning mechanism, the antimalware scanning mechanism comprising one or more antimalware-related components, wherein the antimalware scanning mechanism is configured to communicate with the guest antimalware agents on the guest partitions, and to provide shared antimalware scanning resources and shared antimalware scanning functionality to the guest partitions via the guest antimalware agents;
the method **characterized by**:
receiving (402), by a management component, a request from the antimalware scanning mechanism to place a guest partition into an offline state, wherein the management component is part of virtual machine management services on a root partition and is configured to communicate with the antimalware scanning mechanism;
placing (404), by the management component, the guest partition into an offline state; scanning (406), by the antimalware scanning mechanism, the offline guest partition while in the offline state, and
taking (410), by the antimalware scanning mechanism, any needed remedial actions against the guest partition in offline state.

6. The method of claim 5 further comprising:
communicating between a shared orchestration mechanism and a scanning component to restore a guest partition to a prior state.

7. The method of claim 5 further comprising, running (302) a guest antimalware agent on a guest partition, receiving (308) data provided by the guest agent at the scanning mechanism, scanning (310) the data at the scanning mechanism, and returning (316) information to the guest agent corresponding to a scanning result, wherein receiving the data and scanning the data comprise performing a real-time monitoring operation.

8. The method of claim 5 further comprising, running (302) a guest antimalware agent on a guest partition, receiving (308) data provided by the guest agent at the scanning mechanism, scanning (310) the data at the scanning mechanism, and returning (316) information to the guest agent corresponding to a scanning result, wherein receiving the data and scanning the data comprise performing an offline operation.

9. The method of claim 5 further comprising, providing instructions from the scanning mechanism to the guest antimalware agent for the guest antimalware agent to execute, including instructions requesting at least one object to scan.

10. The method of claim 5 further comprising, providing instructions from the scanning mechanism to the guest antimalware agent for the guest antimalware agent to execute, including at least one instruction specifying a remediation action for the guest antimalware agent to perform.

11. The method of claim 5 further comprising, providing instructions from the scanning mechanism to the guest antimalware agent for the guest antimalware agent to execute, including instructions requesting at least one object to scan, and at least one instruction specifying a remediation action for the guest antimalware agent to perform.

12. One or more computer-readable media having computer-executable instructions, which when executed perform steps, comprising:
receiving a first object set comprising one or more objects at a shared antimalware scanning mechanism from a first guest agent that runs in a first guest partition of a virtual machine environment;
performing antimalware scanning of the first object set at the shared scanning mechanism, and returning information corresponding to a result of the scanning to the first guest agent;
receiving a second object set comprising one or more objects at the shared antimalware scanning mechanism from a second guest agent that runs in a second guest partition of a virtual machine environment;
performing antimalware scanning of the second object set at the shared scanning mechanism and returning information corresponding to a result of the scanning to the second guest agent, and **characterized by**:
the one or more computer-readable media having further computer-executable instructions, which when executed perform steps, comprising:
configuring a management component that is part of virtual machine management services on a root partition to communicate with the shared antimalware scanning mechanism, and
configuring the shared antimalware scanning mechanism to communicate with the management component to use the management services to place a guest partition into an offline state for scanning, and to take any needed remedial actions against the guest partition in offline state.

13. The one or more computer-readable media of claim 12 having further computer-executable instructions comprising, performing remediation to at least one object at the shared scanning mechanism.

14. The one or more computer-readable media of claim 12 having further computer-executable instructions comprising, constructing a result at the shared scanning mechanism that instructs the first agent to perform remediation to at least one object.

15. The one or more computer-readable media of claim 12 having further computer-executable instructions comprising, performing remediation to at least one object at the shared scanning mechanism and constructing a result at the shared scanning mechanism that instructs the first agent to perform remediation to at least one object.

## Patentansprüche

1. System (102, 202) in einer Computerumgebung, wobei das System umfasst:
eine Vielzahl von Gastpartitionen (106, 114₁-114ₘ, 214₁-214ₙ), die virtuellen Maschinen in einer Umgebung virtueller Maschinen entsprechen, wobei jede Gastpartition einen Gast-Antischadsoftware-Agenten (116₁-116ₘ, 216₁-216ₙ) enthält; und
einen Antischadsoftware-Abtastmechanismus (104, 204) mit einer oder mehreren antischadsoftware-bezogenen Komponenten, wobei der Antischadsoftware-Abtastmechanismus zur Kommunikation mit den Gast-Antischadsoftware-Agenten auf den Gastpartitionen konfiguriert ist, wobei der Antischadsoftware-Abtastmechanismus weiterhin dazu eingerichtet ist, gemeinsam genutzte Antischadsoftware-Abtastressourcen und gemeinsam genutzte Antischadsoftware-Abtastfunktionalität für die Gastpartitionen über die Gast-Antischadsoftware-Agenten bereitzustellen,
wobei das System weiterhin umfasst:
eine Verwaltungskomponente (108, 208), die Teil der Verwaltungsdienste (110) der virtuellen Maschine auf einer Stammpartition (112, 212) ist, wobei die Verwaltungskomponente zur Kommunikation mit dem Antischadsoftware-Abtastmechanismus konfiguriert ist,
**dadurch gekennzeichnet, dass**
der Antischadsoftware-Abtastmechanismus weiterhin dazu eingerichtet ist, mit der Verwaltungskomponente zu kommunizieren, um die Verwaltungsdienste zu verwenden, um eine Gastpartition in einen Offline-Zustand zum Abtasten durch den Antischadsoftware-Abtastmechanismus zu versetzen; und der Antischadsoftware-Abtastmechanismus weiterhin dazu eingerichtet ist, beliebige erforderlichen Korrekturmaßnahmen gegen die Gastpartition im Offline-Zustand zu ergreifen.

2. System nach Anspruch 1, bei dem die Verwaltungskomponente dazu eingerichtet ist, die Gast-Antischadsoftware-Agenten zu schützen und virtuelle Maschinen anzuhalten, wiederaufzunehmen, wiederherzustellen und neu aufzubauen, um das Abtasten und die Abhilfe von Infektionen zu ermöglichen.

3. System nach Anspruch 2, bei dem der Antischadsoftware-Abtastmechanismus mit der Verwaltungskomponente kommuniziert, um die Verwaltungsdienste zum Anhalten einer Gastpartition, zum Fortsetzen einer Gastpartition, zum Schnappschuss einer Gastpartition, zum Zurücksetzen einer Gastpartition auf einen vorherigen bekannten guten Schnappschuss oder Wiederherstellen eines Images für virtuelle Maschinen zu verwenden.

4. System nach Anspruch 1, bei dem der Antischadsoftware-Abtastmechanismus weiterhin dazu eingerichtet ist, Signaturaktualisierungen von einem entfernten Datenstandort zu beziehen, Telemetriedaten zu einem entfernten Datenstandort hochzuladen oder mit einem Cloud-Dienst in Bezug auf das Beziehen einer Entscheidung über verdächtigen Inhalt zu kommunizieren, oder in einer beliebige Kombination weiterhin dazu eingerichtet ist, Signaturaktualisierungen von einem entfernten Datenstandort zu beziehen, Telemetriedaten zu einem entfernten Datenstandort hochzuladen oder mit einem Cloud-Dienst in Bezug auf das Erhalten einer Entscheidung über verdächtigen Inhalt zu kommunizieren.

5. Verfahren in einer Computerumgebung, das wenigstens teilweise auf wenigstens einem Prozessor ausgeführt wird, wobei das Verfahren umfasst:
Ausführen (302) einer Vielzahl von Gastpartitionen, die virtuellen Maschinen in einer Umgebung virtueller Maschinen entsprechen, wobei jede Gastpartition einen Gast-Antischadsoftware-Agenten umfasst; und
Ausführen (304) eines Antischadsoftware-Abtastmechanismus', wobei der Antischadsoftware-Abtastmechanismus eine oder mehrere antischadsoftware-bezogene Komponenten umfasst, wobei der Antischadsoftware-Abtastmechanismus dazu eingerichtet ist, mit den Gast-Antischadsoftware-Agenten auf den Gastpartitionen zu kommunizieren und gemeinsam genutzte Antischadsoftware-Abtastressourcen und gemeinsam genutzte Antischadsoftware-Abtastfunktionalität für die Gastpartitionen über die Gast-Antischadsoftware-Agenten bereitzustellen;
wobei das Verfahren **gekennzeichnet ist durch**:
Empfangen (402), **durch** eine Verwaltungskomponente, einer Anforderung von dem Antischadsoftware-Abtastmechanismus eine Gastpartition in einen Offline-Zustand zu versetzen, wobei die Verwaltungskomponente Teil von Verwaltungsdiensten einer virtuellen Maschine auf einer Stammpartition ist und zum Kommunizieren mit dem Antischadsoftware-Abtastmechanismus konfiguriert ist;
Versetzen (404) der Gastpartition **durch** die Verwaltungskomponente in einen Offline-Zustand;
Abtasten (406) der Offline-Gastpartition im Offline-Status **durch** den Anti-Malware-Suchmechanismus, und
Vornehmen (410) sämtlicher erforderlichen Korrekturmaßnahmen gegen die Gast-partition im Offline-Zustand **durch** den Antischadsoftware-Abtastmechanismus.

6. Verfahren nach Anspruch 5, weiterhin umfassend:
Kommunizieren zwischen einem gemeinsam genutzten Orchestrierungsmechanismus und einer Abtastkomponente, um eine Gastpartition in einen früheren Zustand zurückzuversetzen.

7. Verfahren nach Anspruch 5, weiterhin umfassend das Ausführen (302) eines Gast-Antischadsoftware-Agenten auf einer Gast-Partition, Empfangen (308) von durch den Gast-Agenten bereitgestellten Daten an dem Abtastmechanismus, Abtasten (310) der Daten an dem Abtastmechanismus und Zurückgeben (316) von Informationen an den Gastagenten entsprechend einem Abtastergebnis, wobei das Empfangen der Daten und das Abtasten der Daten das Durchführen eines Echtzeitüberwachungsvorgangs umfassen.

8. Verfahren nach Anspruch 5, weiterhin umfassend das Ausführen (302) eines Gast-Antischadsoftware-Agenten auf einer Gastpartition, Empfangen (308) von durch den Gastagenten bereitgestellten Daten an dem Abtastmechanismus, Abtasten (310) der Daten an dem Abtastmechanismus und Zurückgeben (316) von Informationen an den Gastagenten, die einem Abtastergebnis entsprechen, wobei das Empfangen der Daten und das Abtasten der Daten das Durchführen eines Offline-Vorgangs umfassen.

9. Verfahren nach Anspruch 5, weiterhin umfassend das Bereitstellen von Anweisungen von dem Abtast-Mechanismus für den Gast-Antischadsoftware-Agenten, damit der Gast-Antischadsoftware-Agent ausgeführt werden kann, einschließlich Anweisungen, die wenigstens ein abzutastendes Objekt anfordern.

10. Verfahren nach Anspruch 5, weiterhin umfassend das Bereitstellen von Anweisungen von dem Abtastmechanismus für den Gast-Antischadsoftware-Agenten, damit der Gast-Antischadsoftware-Agent dies ausführt, einschließlich wenigstens einer Anweisung, die eine Korrekturaktion spezifiziert, die der Gast-Antischadsoftware-Agent ausführen soll.

11. Verfahren nach Anspruch 5, weiterhin umfassend das Bereitstellen von Anweisungen von dem Abtastmechanismus für den Gast-Antischadsoftware-Agenten, damit der Gast-Antischadsoftware-Agent dies ausführt, einschließlich Anweisungen, die wenigstens ein abzutastendes Objekt anfordern, und wenigstens einer Anweisung, die eine Korrekturaktion festlegt, die vom Gast Antischadsoftware-Agenten auszuführen ist.

12. Ein oder mehrere computerlesbare Medien mit computerausführbaren Anweisungen, die, wenn sie ausgeführt werden, Schritte ausführen, die umfassen:
Empfangen eines ersten Objektsatzes, der ein oder mehrere Objekte umfasst, an einem gemeinsam genutzten Antischadsoftware-Abtastmechanismus von einem ersten Gastagenten, der auf einer ersten Gastpartition einer virtuellen Maschinenumgebung läuft;
Ausführen einer Antischadsoftware-Abtastung des ersten Objektsatzes an dem gemeinsam genutzten Abtastmechanismus und Zurückgeben von Informationen, die einem Ergebnis des Abtastens entsprechen, an den ersten Gastagenten;
Empfangen eines zweiten Objektsatzes, der ein oder mehrere Objekte umfasst, an dem gemeinsam genutzten Antischadsoftware-Abtastmechanismus von einem zweiten Gastagenten, der in einer zweiten Gastpartition einer virtuellen Maschinenumgebung läuft; und
Ausführen einer Antischadsoftware-Abtastung des zweiten Objektsatzes an dem gemeinsam genutzten Abtastmechanismus und Zurückgeben von Informationen, die einem Ergebnis des Abtastens entsprechen, an den zweiten Gast-Agenten,
**dadurch gekennzeichnet, dass**:
das eine oder die mehreren computerlesbaren Medien weitere computerausführbare Anweisungen aufweisen, die, wenn sie ausgeführt werden, Schritte ausführen, die umfassen:
Konfigurieren einer Verwaltungskomponente, die Teil der Verwaltungsdienste der virtuellen Maschine auf einer Stammpartition ist, um mit dem gemeinsam genutzten Antischadsoftware-Abtastmechanismus zu kommunizieren, und
Konfigurieren des gemeinsam genutzten Antischadsoftware-Abtastmechanismus, um mit der Verwaltungskomponente zu kommunizieren, die Verwaltungsdienste zu verwenden, um eine Gastpartition zum Abtasten in einen Offline-Status zu versetzen und erforderliche Korrekturmaßnahmen an der Gastpartition im Offline-Zustand auszuführen.

13. Das eine oder die mehreren computerlesbaren Medien nach Anspruch 12, die weitere computerausführbare Anweisungen aufweisen, die das Ausführen einer Korrektur für wenigstens ein Objekt an dem gemeinsamen Abtastmechanismus umfassen.

14. Das eine oder die mehreren computerlesbaren Medien nach Anspruch 12, die weitere computerausführbare Anweisungen aufweisen, die das Konstruieren eines Ergebnisses an dem gemeinsam genutzten Abtastmechanismus umfassen, der den ersten Agenten anweist, eine Korrektur für mindestens ein Objekt durchzuführen.

15. Ein oder mehrere computerlesbare Medien nach Anspruch 12, die weitere computerausführbare Anweisungen aufweisen, die das Ausführen einer Korrektur für wenigstens ein Objekt an dem gemeinsamen Abtastmechanismus und das Konstruieren eines Ergebnisses an dem gemeinsam genutzten Abtastmechanismus umfassen, das den ersten Agenten anweist, eine Korrektur für wenigstens ein Objekt auszuführen.

## Revendications

1. Système (102, 202) dans un environnement informatique, le système comprenant :
une pluralité de partitions invitées (106, 114₁,-114ₘ, 214₁-214ₙ) correspondant à des machines virtuelles dans un environnement de machine virtuelle, chaque partition invitée incluant un agent anti-programme malveillant invité (116₁-116ₘ, et 216₁-216ₙ) ; et
un mécanisme d'analyse anti-programme malveillant (104, 204) comprenant un ou plusieurs composants liés aux programmes malveillants, le mécanisme d'analyse anti-programme malveillant configuré pour communiquer avec les agents anti-programme malveillant invités sur les partitions invitées, le mécanisme d'analyse anti-programme malveillant configuré en outre pour fournir des ressources d'analyse anti-programme malveillant partagées et une fonctionnalité d'analyse anti-programme malveillant partagée aux partitions invitées via les agents anti-programme malveillant invités,
le système comprenant en outre :
un composant de gestion (108, 208) qui fait partie de services de gestion de machine virtuelle (110) sur une partition racine (112, 212), le composant de gestion étant configuré pour communiquer avec le mécanisme d'analyse anti-programme malveillant,
**caractérisée en ce que**
le mécanisme d'analyse anti-programme malveillant est configuré en outre pour communiquer avec le composant de gestion pour utiliser les services de gestion pour mettre une partition invitée dans un état hors ligne pour une analyse par le mécanisme d'analyse anti-programme malveillant ; et dans lequel le mécanisme d'analyse anti-programme malveillant est configuré en outre pour prendre toute mesure corrective nécessaire contre la partition invitée dans un état hors ligne.

2. Le système de la revendication 1 dans lequel le composant de gestion est configuré pour protéger les agents anti-programme malveillant invités et pour suspendre, faire reprendre, rétablir et reconstituer des machines virtuelles pour activer une analyse et remédier à des infections.

3. Le système de la revendication 2 dans lequel le mécanisme d'analyse anti-programme malveillant communique avec le composant de gestion pour utiliser les services de gestion pour interrompre une partition invitée, faire reprendre une partition invitée, générer un instantané d'une partition invitée, rétablir une partition invitée en revenant à un instantané précédent valide identifié, ou reconstituer une image d'une machine virtuelle.

4. Le système de la revendication 1 dans lequel le mécanisme d'analyse anti-programme malveillant est configuré en outre pour obtenir des mises à jours de signatures auprès d'un emplacement de données distant, télécharger des données de télémétrie vers un emplacement de données distant ou communiquer avec un service cloud par rapport à une obtention d'une décision sur un contenu suspicieux, ou toute combinaison de configuration plus avant pour obtenir des mises à jours de signatures auprès d'un emplacement de données distant, télécharger des données de télémétrie vers un emplacement de données distant ou communiquer avec un service cloud par rapport à une obtention d'une décision sur un contenu suspicieux.

5. Procédé, dans un environnement informatique, exécuté au moins en partie sur au moins un processeur, le procédé comprenant :
exécution (302) d'une pluralité de partitions invitées correspondant à des machines virtuelles dans un environnement de machine virtuelle, chaque partition invitée incluant un agent anti-programme malveillant ; et
exécution (304) d'un mécanisme d'analyse anti-programme malveillant, le mécanisme d'analyse anti-programme malveillant comprenant un ou plusieurs composants liés aux programmes malveillants, dans lequel le mécanisme d'analyse anti-programme malveillant est configuré pour communiquer avec les agents anti-programme malveillant invités sur les partitions invitées, et pour fournir des ressources d'analyse anti-programme malveillant partagées et une fonctionnalité d'analyse anti-programme malveillant partagée aux partitions invitées via les agents anti-programme malveillant invités ;
le procédé **caractérisé par** :
réception (402), par un composant de gestion, d'une demande issue du mécanisme d'analyse anti-programme malveillant de mettre une partition invitée dans un état hors ligne, dans lequel le composant de gestion fait partie de services de gestion de machine virtuelle sur une partition racine et est configuré pour communiquer avec le mécanisme d'analyse anti-programme malveillant ;
mise (404), par le composant de gestion, de la partition invitée dans un état hors ligne ;
analyse (406), par le mécanisme d'analyse anti-programme malveillant, de la partition invitée hors ligne tandis que dans l'état hors ligne, et
prise (410), par le mécanisme d'analyse anti-programme malveillant, de toute mesure corrective nécessaire contre la partition invitée en état hors ligne.

6. Le procédé de la revendication 5 comprenant en outre :
communication entre un mécanisme d'orchestration partagé et un composant d'analyse pour faire revenir une partition invitée à un état antérieur.

7. Le procédé de la revendication 5, comprenant en outre, une exécution (302) d'un agent anti-programme malveillant invité sur une partition invitée, une réception (308) de données fournies par l'agent invité au niveau du mécanisme d'analyse, une analyse (310) des données au niveau du mécanisme d'analyse, et un renvoi (316) d'informations à l'agent invité correspondant à un résultat d'analyse, dans lequel une réception des données et une analyse des données comprennent une exécution d'une opération de surveillance en temps réel.

8. Le procédé de la revendication 5, comprenant en outre, une exécution (302) d'un agent anti-programme malveillant invité, une réception (308) de données fournies par l'agent invité au niveau du mécanisme d'analyse, une analyse (310) des données au niveau du mécanisme d'analyse, et un renvoi (316) d'informations à l'agent invité correspondant à un résultat d'analyse, dans lequel une réception des données une analyse des données comprennent une exécution d'une opération hors ligne.

9. Le procédé de la revendication 5 comprenant en outre, une mise à disposition d'instructions issues du mécanisme d'analyse auprès de l'agent anti-programme malveillant invité pour que l'agent anti-programme malveillant invité s'exécute, incluant des instructions sollicitant au moins un objet à analyser.

10. Le procédé de la revendication 5 comprenant en outre, une mise à disposition d'instructions issues du mécanisme d'analyse auprès de l'agent anti-programme malveillant invité pour que l'agent anti-programme malveillant invité s'exécute, incluant au moins une instruction spécifiant une action de réparation à exécuter par l'agent anti-programme malveillant invité.

11. Le procédé de la revendication 5 comprenant en outre, une mise à disposition d'instructions issues du mécanisme d'analyse auprès de l'agent anti-programme malveillant invité pour que l'agent anti-programme malveillant invité s'exécute, incluant des instructions sollicitant au moins un objet à analyser, et au moins une instruction spécifiant une action de réparation à exécuter par l'agent anti-programme malveillant invité.

12. Un ou plusieurs supports lisibles par un ordinateur présentant des instructions exécutables par un ordinateur, qui lorqu'exécutées effectuent des étapes, comprenant :
réception d'un premier ensemble d'objets comprenant un ou plusieurs objets au niveau d'un mécanisme d'analyse anti-programme malveillant partagé issu d'un premier agent invité qui s'exécute sur une première partition invitée d'un environnement de machine virtuelle ;
exécution d'une analyse anti-programme malveillant du premier ensemble d'objets au niveau du mécanisme d'analyse partagé, et renvoi d'informations correspondant à un résultat de l'analyse au premier agent invité ;
réception d'un deuxième ensemble d'objets comprenant un ou plusieurs objets au niveau du mécanisme d'analyse anti-programme malveillant partagé issu d'un deuxième agent invité qui s'exécute sur une deuxième partition invitée d'un environnement de machine virtuelle ;
exécution d'une analyse anti-programme malveillant du deuxième ensemble d'objets au niveau du mécanisme d'analyse partagé, et renvoi d'informations correspondant à un résultat de l'analyse au deuxième agent invité, et **caractérisé par** :
l'un ou plusieurs supports lisibles par un ordinateur présentant d'autres instructions exécutables par un ordinateur, qui lorqu'exécutées effectuent des étapes, comprenant :
configuration d'un composant de gestion qui fait partie de services de gestion de machine virtuelle sur une partition racine pour communiquer avec le mécanisme d'analyse anti-programme malveillant partagé, et
configuration du mécanisme d'analyse anti-programme malveillant partagé pour communiquer avec le composant de gestion pour utiliser les services de gestion pour mettre une partition invitée dans un état hors ligne pour analyse, et pour prendre toute mesure corrective nécessaire contre la partition invitée dans un état hors ligne.

13. L'un ou plusieurs supports lisibles par un ordinateur de la revendication 12 présentant d'autres instructions exécutables par un ordinateur, exécutant une réparation auprès d'au moins un objet au niveau du mécanisme d'analyse partagé.

14. L'un ou plusieurs supports lisibles par un ordinateur de la revendication 12 présentant d'autres instructions exécutables par un ordinateur comprenant, une construction d'un résultat au niveau du mécanisme d'analyse partagé qui signifie au premier agent d'exécuter une réparation auprès d'au moins un objet.

15. L'un ou plusieurs supports lisibles par un ordinateur de la revendication 12 présentant d'autres instructions exécutables par un ordinateur comprenant, une exécution d'une réparation sur au moins un objet au niveau du mécanisme d'analyse partagé et une construction d'un résultat au niveau du mécanisme d'analyse partagé qui signifie au premier agent d'exécuter une réparation auprès d'au moins un objet.
